# EUROPEAN PATENT SPECIFICATION

(11) **EP 0 516 273 B1**
(45) Date of publication and mention of the grant of the patent: **01.07.1998**
(21) Application number: 92303396.3
(22) Date of filing: 15.04.1992
(51) Int. Cl.: C08L 63/04, C08G 59/40

(54) **Thermal resistance resin dust**
Wärmefestes, staubförmiges Harz
Résine sous forme de poussière démontrant une résistivité thermique

(30) Priority: 15.04.1991 JP 109902/91
(43) Date of publication of application: 02.12.1992
(73) Proprietor: MITSUBISHI GAS CHEMICAL COMPANY, INC., Chiyoda-ku, Tokyo (JP)
(72) Inventor: Ohya, Kazuyuki, c/o Mitsubishi Gas Chemical Co.Inc, Chiyoda-ku, Tokyo (JP)
(74) Representative: Smaggasgale, Gillian Helen

(56) References cited:
- EP-A- 0 324 908
- EP-A- 0 344 778
- WORLD PATENTS INDEX LATEST Derwent Publications Ltd., London, GB; AN 87-344225
- WORLD PATENTS INDEX LATEST Derwent Publications Ltd., London, GB; AN 85-078377

## Description

The present invention relates to an improved thermal resistance resin dust for friction material.

More particularly, the present invention relates to a thermal resistance resin dust obtained by a process which comprises preparing a composition comprising (I) an aromatic hydrocarbon-formaldehyde resin-modified novolak type epoxy resin and (II) a cyanate ester resin composition, curing the resulting composition at a final curing temperature of not less than 200°C and grinding the cured product. The cured product has a 10% weight loss on heating at a temperature of not less than 320°C, which is used in this technical field as a thermal resistance factor, and is thermally decomposed without undergoing liquefaction. The carbonization ratio of the decomposed substance is also high. The friction coefficient at 400°C of friction material obtained from the resin dust is as high as the friction coefficient at 100°C. In addition, the friction coefficient of the friction material at room temperature is also high. As a result, when the resin dust of the present invention is used as a disc brake pad, harsh sound is sufficiently reduced and the high friction coefficient and excellent anti-fade performance can be maintained in braking at high speeds. In addition, the resin dust of the present invention has excellent wearing properties.

In the prior art, formalin resin obtained by using cashew nutshell oil, drying oil, etc. or a rubber, such as a natural rubber or SBR have been used as relatively less expensive organic friction dusts for friction material. However, these prior friction dusts have poor thermal resistance, and mechanical strength upon heating, and the upper limit of use temperature thereof is low.

For example, a rubber-based dust obtained by thermal-treating carbon-containing rubber, such as used tire, followed by grinding the thus-treated rubber has a temperature, at which weight loss or heating starts, of as low as 150 - 200°C and 10% weight loss on heating, which is used as a thermal resistance fator, is as low as 200 - 230°C. In addition at high temperatures, the rubber becomes pitchy. Therefore, the friction coefficient of the rubber is lowered greatly.

Cashew resin dust which is used in the greatest amount undergoes 10% weight loss on heating in air at 260 - 300°C, and is thermally decomposed at a temperature of 520 - 550°C; residual carbon of cashew resin dust upon thermal decomposition is very low. The cashew resin dust is decomposed via pitch at a temperature of about 280°C, similar to rubber-based dust. Therefore, the friction coefficient thereof is lowered greatly. The dust also has great shortcomings from the viewpoint of safety. In addition, since a strongly acidic compound is used as a catalyst for preparing the cashew dust, a metallic filler is likely to be corroded by the remaining acidic compound.

Conventional friction materials which use asbestos as a reinforcement substrate and a phenol resin as a binder resin are increasingly supplanted by non-asbestos types as exemplified by semi-metallic friction materials using steel fibers as a reinforcement substrate and a friction material that uses aramid fibers or a carbon filler as a chief component of the reinforcement substrate. However, it is known that disk brake pads using those substitute reinforcement substrates have proved to generate a harsh sound generally called " brake squeal" when braking is applied. EP-A-344778 discloses a disk brake pad employing a cyanate ester based resin as a binder and e.g. a cured phenol-novolak resin as friction abrasion moderator.

An object of the present invention is to provide a resin dust which can be used as a material for the production of a friction member such as a disk brake pad that imparts a consistent friction coefficient over the range of from ambient temperature to high temperatures of at least 400°C, that will decompose without undergoing liquefaction which can be a cause of fade, and that is capable of effectively damping brake squeal which would otherwise occur when braking is applied.

The present invention relates to a thermal resistance resin dust obtained by a process which comprises
a step of preparing a composition comprising
   (I) an aromatic hydrocarbon-formaldehyde resin-modified novolak type epoxy resin and
   (II) a cyanate ester resin composition comprising (a) polyfunctional cyanate esters, prepolymers of said cyanate ester, or prepolymers of said cyanate ester and an amine; or (a) in combination with (b) a monofunctional or polyfunctional maleimide, a prepolymer of said maleimide or a prepolymer of said maleimide and an amine, the amount of Component (II) being used in an amount of less than 50% by weight on the basis of combined weight of Components (I) and (II),
a step of curing the composition at a final curing temperature of not less than 200°C and
a step of grinding the cured product.

The present invention also relates to a thermal resistance resin dust obtained by a process which comprises
a step of preparing a composition comprising
   (I) an aromatic hydrocarbon-formaldehyde resin-modified novolak type epoxy resin,
   (II) a cyanate ester resin composition comprising (a) polyfunctional cyanate esters, prepolymers of said cyanate ester, or prepolymers of said cyanate ester and an amine; or (a) in combination with (b) a monofunctional or polyfunctional maleimide, a prepolymer of said maleimide or a prepolymer of said maleimide and an amine and
   (III) an inorganic filler with cleavage property, the amount of Component (II) being used in an amount of less than 50% by weight on the basis of combined weight of Components (I) and (II), Component (III) being used in an amount of 5 - 60 parts by weight per 100 parts by weight of the combined amount of Components (I) and (II),
a step of curing the composition at a final curing temperature of not less than 200°C and
a step of grinding the cured product.

The preferable embodiments of the present invention are as follows:
(1) The aromatic hydrocarbon-formaldehyde resin-modified novolak type epoxy resin (I) is obtained by reacting an aromatic hydrocarbon resin, a phenol and a formaldehyde to form an aromatic hydrocarbon-formaldehyde resin-modified novolak, followed by reacting the OH group of the resulting novolak with epichlorohydrin to epoxidize the novolak.
(2) The aromatic hydrocarbon-formaldehyde resin has a number average molecular weight of 350-1000, an oxygen content of 5-20% and a melting point of 40-120°C.
(3) The aromatic hydrocarbon-formaldehyde resin has a number average molecular weight of 350-1000, an oxygen content of 5-20% and a melting point of 40-120°C.
(4) The amount of said cyanate ester resin compound employed is in the range of 10-40% by weight.
(5) The aromatic hydrocarbon-formaldehyde resin-modified novolak is prepared by using an aromatic hydrocarbon-formaldehyde resin/phenol having a ratio by weight of 100:100 to 100:200.

The aromatic hydrocarbon-formaldehyde resin-modified novolak type epoxy resin (hereinunder referred to as Component (I)) is obtained by reacting an aromatic hydrocarbon resin, a phenol and a formaldehyde to form an aromatic hydrocarbon-formaldehyde resin-modified novolak, followed by reacting the OH group of the resulting novolak with epichlorohydrin to epoxidize the novolak.

Usually, the epoxy resins are epoxy resin derived from bisphenol A, phenol novolak or cresol novolak. However, when a bisphenol A type epoxy resin is used instead of the hydrocarbon-formaldehyde resin-modified novolak epoxy resin, the resulting resin dust has poor thermal resistance and becomes sticky at high temperature. Therefore, the friction coefficient of the dust becomes unstable, and wear is high. Therefore, the resin cannot be used.

When novolak type epoxy resin derived from phenol or cresol is used instead of Component (I), the resulting resin dust is rigid and brittle.

The aromatic hydrocarbon-formaldehyde resin can be prepared from one or more of mesitylene, xylene, toluene, benzene, naphthalene and the other aromatic hydrocarbon-formaldehyde. Examples of the aromatic hydrocarbon-formaldehyde resins include mesitylene resin, xylene resin, toluene resin, benzene resin and naphthalene resin.

Examples of the phenols include phenol, cresol, xylenol and resorcinol.

Examples of the formaldehydes include formaldehyde and compounds which generate formaldehyde under the reaction conditions.

The aromatic hydrocarbon-formaldehyde resin-modified novolaks may be obtained by reacting an aromatic hydrocarbon-formaldehyde resin with a phenol in the presence of an inorganic acid, such as sulfuric acid, hydrochloric acid or nitric acid; an acidic catalyst, such as toluene sulfonic acid, xylene sulfonic acid, or oxalic acid; or a neutral catalyst, such as calcium acetate, magnesium acetate, zinc acetate or the other organic metal salt, followed by reacting the reaction product with a formaldehyde. The aromatic hydrocarbon-formaldehyde resin-modified novolak may also be obtained by reacting a phenol with a formaldehyde, followed by reacting the reaction product with an aromatic hydrocarbon-formaldehyde resin. Alternatively, the novolak may be obtained by reacting an aromatic hydrocarbon-formaldehyde, a phenol and a formaldehyde at the same time. It is not preferable to use hexamethylene tetramine as a catalyst.

It is preferable that the aromatic hydrocarbon resin and the phenol be used in an approximately stoichiometric amount. That is, the aromatic hydrocarbon-formaldehyde resin and the phenol are preferably used in such proportions that the amount of phenol is approximately equal to the equivalent amount of a reactive group with phenol that is commonly used in the aromatic hydrocarbon-formaldehyde resin. Examples of the reactive groups include oxygen-containing groups, such as -CH₂-OH, -CH₂-O-CH₂-, -CH₂-O- and -CH₂-O-CH₂-OH. When the amount of a phenol is too small, some of the reaction product is gelled. As a result, the viscosity of the reaction mixture is increased, so the reaction is discontinued, unreacted materials remain in the reaction system. Conversely, if the amount of a phenol is too great, the friction coefficient of the resulting resin becomes unstable at a temperature of not less than 300°C.

The formaldehyde is used in a sufficient amount to cause a reaction for yielding a novolak.

For example, when xylene-formaldehyde resin (a number average molecular weight of 350-800 and an oxygen content of 8-17% weight) is reacted with a phenol, the ratio of the xylene-formaldehyde resin to the phenol may be in the range of 100:100 to 100:250 (by weight), and preferably 100:100 to 100:200. In this case, the resulting aromatic hydrocarbon-formaldehyde resin-modified novolak usually has a melting point of 60-100°C and is a brown solid.

Usually, an aromatic hydrocarbon-formaldehyde resin-modified novolak contains a phenol in an amount of about 5-6% by weight. The phenol-containing novolak can be used for preparing Component (I) of the present invention, as it is. If the content of the phenol is reduced to not more than 3% by weight, preferably not more than 1.5% by weight through reduced pressure treatment, the resulting novolak containing a phenol in an amount of not more than 3%, preferably not more than 3% by weight is preferable from a point of view of improvement in working environment and improvement in stability of the curing reaction of Components (I) and (II).

The phenolic hydroxy group of the aromatic hydrocarbon-formaldehyde resin-modified novolak is reacted with epichlorohydrin for epoxidation to form Component (I). The reaction is know. The resulting epoxy resin (Component (I)) usually has a melting point of not less than 45°C.

The Cyanate ester resin composition (hereinunder referred to as Component (II)) contains (a) a polyfunctional cyanate ester, a prepolymer of said cyanate ester or a prepolymer of said cyanate ester and an amine or (a) and (b) a monofunctional or polyfunctional maleimide, prepolymer of said maleimide or prepolymer of said maleimide and an amine. In order to improve thermal resistance of the composition, (b) a monofunctional or polyfunctional maleimide, a prepolymer of the maleimide or a prepolymer of the maleimide and an amine (Component (b)) may be added to the Component (II). In order to improve working properties, (c) epoxy resin may be added to the composition (II).

Cyanate ester resins (a) are known and are described in Japanese Patent Publication (Kokoku) Nos. 41-1928; 45-11712 and 44-1222; German Patent No. 1190184 and US Patent Nos. 4026913; 4022755; 3448079; 3553244; 3755402; 3740348; 3595900; 3694410 and 4116946.

Cyanate ester-maleimide resin ((a) + (b)) and cyanate ester-maleimide-epoxy resin ((a) + (b) + (c)) are described in Japanese Patent Publication (Kokoku) Nos. 54-30440 and 52-31279 and US Patent No. 4110364. In addition, cyanate ester-epoxy resin ((a) + (c)) is described in Patent Publication (Kokoku) No. 46-41112.

When maleimide Component (b) is used in the composition (II), the amount of the maleimide compound (b) employed may be not more than 80% by weight, and preferably 30 - 60% by weight. When the epoxy resin (c) is used, it is preferable to use an epoxy resin having a functionality of at least 3. The amount of the epoxy resin (c) employed is usually not more than 30% by weight and preferably 2 - 10% by weight. It is preferable to use the Component (a) in a major amount.

An inorganic filler with cleavage property (III) (hereinunder referred to as Component (III)) is used in the present second invention. Component (III) is effective in respect of the stability of the curing reaction and damping of brake squeal.

Examples of Component (III) include mica, talc, wollastonite, graphite, h-BN (hexagonal boron nitride), in a flake-like powder or needle-like powder. The average particle size of Component (III) may be in the range of 0.1 - 300 µm. It is preferable to use an inorganic filler having average particle size of 1.0 - 200 µm in the present invention. Mica is preferable. Examples of micas include muscovite, phlogopite and biotite which are aluminum silicate-type natural minerals, fluorinated micas obtained by fluorinating these natural micas, and synthetic mica.

It is preferable to use water-free mica in the invention. In particular, when a natural mica is used, it is preferable to dry the mica at a temperature of about 250°C for one or more hours.

In the first invention, Component (II) may be in the range of not more than 50% by weight and preferably 10 - 40% by weight on the basis of the total amount of Components (I) and (II). The known catalyst for Components (I) or (II) may be added to the mixture of Components (I) and (II). Components (I) and (II) may be melt-blended and then they may be cured at a final curing temperature of not less than 200°C so as to make the removal of reaction heat easier. The final curing temperature may be not more than 400°C, preferably in the range of 200 - 350°C under a nitrogen atmosphere, and may be not more than 270°C, preferably in the range of 200 - 240°C in air. The cured product is ground to obtain the resin dust.

In the second invention, the cyanate ester-based curable resin composition (II) may be in the range of not more than 50% by weight and preferably 10 - 40% by weight on the basis of the total amount of Components (I) and (II).

Component (III) may be used in an amount of 5 - 60 parts by weight, and preferably 8 - 40 parts by weight per 100 parts by weight the combined amount of Components (I) and (II). The known catalyst for Component (I) or (II) may be added to the mixture of Components (I) and (II). Components (I) and (II) may be melt-blended and then they may be cured at a final curing temperature of not less than 200°C under such conditions that the reaction heat is removed. The cured product is ground to obtain the resin dust.

In this case, Component (III) may be preliminarily mixed with Component (II) and then the mixture may be melt-blended with Component (I), and then the mixture may be cured. This method is preferable, since more uniform and more stable cured product can be obtained.

Optionally, the catalysts for Component (I) and the catalysts for Component (II) may be used. Examples of the catalysts for Component (I) include aliphatic or aromatic amines, imidazole, and phenol novolak resin. The catalysts for Component (II) include organic metal salts (including metal chelate compounds), inorganic metal salts and organic peroxides. These catalysts may be used alone or as a mixture. Examples of the organic metal salts include zinc naphthenate, lead stearate, lead naphthenate, zinc octoate, tin oleate, tin octoate, dibutyl tin maleate, manganese naphthenate, cobalt naphthenate, iron acetylacetonate and manganese acetylacetonate. Examples of the organic peroxides include benzoyl peroxide, lauroyl peroxide, capryl peroxide, acetyl peroxide, para-chloro benzoyl peroxide and di-tert.-butyl-di-perphthalate. Usually, a catalytic amount of the catalyst may be used. The amount of the catalyst may be in the range of 0.01 - 5% by weight on the basis of the weight of the total composition.

This invention is further explained by way of the following non-limiting examples. All percentages and parts are on a weight basis, unless otherwise specified.

### Example

### Example 1

Xylene-formaldehyde resin (Mitsubishi Gas Chemical Co. Inc.(hereinunder referred to as MGC); Trade Name of Nikanol H; a number of average molecular weight of 460 - 500, and an oxygen content of 10 - 11%) (100 parts) was reacted with phenol (120 parts) in the presence of para-toluene sulfonic acid (0.1 part) as a catalyst at 130°C for 2 hours. Then zinc acetate dihydrate (1 part) and 37% formalin (40 parts) were added to the reaction mixture, and the reaction was carried out at 100°C for 3 hours. Then, the mixture was dehydrated at a reduced pressure while heating. When the temperature raised to 150°C, dehydration was completed to obtain xylene resin-modified novolak phenol resin having a melting point of 80°C.

The above xylene resin-modified novolak phenol resin (100 parts), epichlorohydrin (170 parts) and water (170 parts) were blended with stirring to form the mixture. Solid sodium hydroxide (17 parts) was added to the resulting mixture while maintaining the mixture at a temperature of 80°C with stirring. The reaction was carried out while blending uniformly. After the reaction was completed, the unreacted epichlorohydrin was removed at a reduced pressure. Benzene was added to the reaction system, and then pure water was added to the reaction system for washing. The water was removed. Again, pure water was added to the system for washing and then was removed. The addition of pure water and the removal of the water were repeated. The benzene was removed through vacuum distillation to obtain xylene resin-modified novolak epoxy resin (hereinunder referred to as Resin I-1 having a melting point of 60°C).

Resin I-1 (70 parts) and cyanate ester-maleimide resin (MGC, BT-2480) (30 parts) were melt-blended at 110°C. 2-Ethyl-4-methylimidazole (0.1 part) as a catalyst was added to the mixture, and the mixture was agitated at 150°C for 30 minutes. The composition was cured at 150°C for 30 minutes, 180°C for 1 hour, 200°C for 1 hour and 220°C for 5 hours in the order of description.

The resulting cured product was cooled to room temperature and ground to obtain resin dust having 0,84-0,18mm (20 - 80 mesh) (hereinunder referred to as Dust 1).

### Example 2

Naphthalene formaldehyde resin (100 parts) was reacted with phenol (100 parts) in the presence of para-toluene sulfonic acid (0.1 part) as a catalyst at 140°C for 2 hours. Then oxalic acid (1 part) and 37% formalin (35 parts) were added to the reaction mixture, and the reaction was carried out at 100°C for 2.5 hours. Then, the mixture was dehydrated at a reduced pressure while heating. When the temperature raised to 165°C, the dehydration was completed to obtain a naphthalene resin-modified novolak phenol resin having a melting point of 130°C.

Naphthalene resin-modified novolak epoxy resin (hereinunder referred to as Resin I-2) having a melting point of 105°C was obtained from the naphthalene resin-modified novolak phenol resin as in Example 1.

Resin I-2 (70 parts) and triazinemonomer (=2,2-bis (4-cyanatophenyl)propane) (30 parts) were melt-blended at 120°C. Zinc octoate (0.2 part) as a catalyst was added to the mixture, and the mixture was agitated at 150°C for 30 minutes. The composition was cured at 150°C for 30 minutes, 180°C for 1 hour, 200°C for 1 hour and 220°C for 5 hours in the order of description.

The resulting cured product was cooled to room temperature and ground to obtain a resin dust having 0,84-0,18mm (20 - 80 mesh) (hereinunder referred to as Dust 2).

### Example 3

The procedure of Example 1 was repeated except that xylene formaldehyde resin (MGC; Trade Name of Nikanol GP, having a melting point of 65 - 70°C) was used. Xylene resin-modified novolak epoxy resin (hereinunder referred to as Resin I-3) having a melting point of 60°C was obtained.

Resin I-3 (70 parts) and cyanate ester-maleimide resin (MGC, BT-2600) (30 parts) were melt-blended at 110°C. 2-Ethyl-4-methylimidazole (0.1 part) as a catalyst was added to the mixture, and the mixture was agitated at 150°C for 30 minutes. The composition was cured at 150°C for 30 minutes, 180°C for 1 hour, 200°C for 1 hour, and 230°C for 5 hours in the order of description.

The resulting cured product was cooled to room temperature and ground to obtain a resin dust having 0,84-0,18mm (20 - 80 mesh) (hereinunder referred to as Dust 3).

### Example 4

Cyanate ester-maleimide resin (MGC, BT-2480) (30 parts) was melted at 110°C. Synthetic mica (Corp Chemical, MK-100; average particle size of 4.7 µm) (20 parts) was added to the melted resin, and the mixture was melt-blended. Resin I-1 (70 parts) of Example 1 and 2-ethyl-4-methyl-imidazole (0.1 part) were added to the mixture. The mixture was blended with stirring at 150°C for 30 minutes. The composition was cured at 150°C for 30 minutes, 180°C for 2 hours, 200°C for 2 hours and 240°C for 3 hours in the order of description.

The resulting cured product was cooled to room temperature and ground to obtain a resin dust having 0,84-0,149 mm (20-100 mesh) (hereinunder referred to as Dust 4).

### Example 5

Cyanate ester-maleimide resin (MGC, BT-2480) (30 parts) was melted at 110°C. Hexagonal boron nitride (h-BN particles) (Kawasaki Steel Co., Ltd., HP; average particle size of 5-15 µm) (20 parts) was added to the melted resin, and the mixture was melt-blended. Resin I-1 (70 parts) of Example 1 and 2-ethyl-4-methylimidazole (0.1 part) were added to the mixture. The mixture was blended with stirring at 150°C for 30 minutes. The composition was cured at 150°C for 30 minutes, 180°C for 2 hours, 200°C for 2 hours and 240°C for 3 hours in the order of description.

The resulting cured product was cooled to room temperature and ground to obtain a resin dust having 0,84-0,149 mm (20-100 mesh) (hereinunder referred to as Dust 5).

### Control Run 1

The procedure of Example 3 was repeated except that cresol novolak type epoxy resin (DIC, N665) was used instead of Resin I-3. Resin dust (hereinunder referred to as Dust C1) having 0,84-0,18 mm (20-80 mesh) was obtained.

### Control Run 2

The procedure of Example 3 was repeated except that bis-phenol A type epoxy resin (Shell, Epikote E-828) was used instead of resin I-3. Resin dust (hereinunder referred to as Dust C2) having 0,84-0,18 mm (20-80 mesh) was obtained.

### Application Example 1

Hexamine (12 parts) was added to phenol novolak resin, and the mixture was ground and uniformly blended by ball mill to obtain a binder resin (hereinunder referred to as PN). Molding material having Dust 1 (10 parts), PN (15 parts), steel fibers (25 parts), rock wool (20 parts), aramide fibers (3 parts), barium sulfate (17 parts) and graphite (10 parts) was prepared. The molding material was compression-molded at 150°C and 140 Kg/cm² for 10 minutes. Afterwards the molded product was withdrawn from the mold, and was after-cured in an oven at 200°C for 8 hours to obtain molded product for friction material.

### Application Example 2

Iron acetyl acetonate (0.2 parts) and dicumyl peroxide (0.3 parts) as a catalyst were added to cyanate ester-maleimide resin (MGC, BT-2480, powder having 0,149mm (mesh size of 100) pass) (100 parts). The mixture was uniformly blended by Henshel mixer to a binder resin (hereinunder referred to as BT-248). Molding material having Dust 2 (10 parts), BT-248 (15 parts), glass fibers (20 parts), rock wood (20 parts) brass fibers (8 parts), aramide fibers (2 parts), barium sulfate (20 parts) and graphite (5 parts) was prepared. The molding material was compression-molded at 180°C and 140 Kg/cm² for 10 minutes. Afterwards the molded product was withdrawn from the mold, and was after-cured in an oven of 230°C for 8 hours to obtain molded product for friction material.

### Application Example 3

Iron acetyl acetonate (0.2 parts) and dicumyl peroxide (0.5 parts) as a catalyst were added to cyanate ester-maleimide resin (MGC, BT-4480, powder having 0,149mm (mesh size of 100) pass) (100 parts). The mixture was uniformly blended by Henshel mixer to binder resin (hereinunder referred to as BT-448). Molding material having Dust 3 (10 parts), BT-448 (15 parts), brass fibers (15 parts), ceramic fiber (15 parts), aramide fibers (10 parts), barium sulfate (25 parts) and graphite (10 parts) was prepared. The molding material was compression-molded at 175°C and 140 Kg/cm² for 10 minutes. Afterwards the molded product was withdrawn from the mold, and was after-cured in an oven of 230°C for 8 hours to obtain molded product for friction material.

### Application Example 4

The procedure of Application Example 1 was repeated except that Dust 4 was used instead of Dust 1 to prepare the molding material. The molding material was compression-molded at 150°C and 250 Kg/cm² for 10 minutes. Afterwards the molded product was withdrawn from the mold, and was after-cured in an oven at 200°C for 8 hours to obtain a molded product for friction material.

### Application Example 5

The procedure of Application Example 2 was repeated except that Dust 5 was used instead of Dust 2 to prepare the molding material. The molding material was compression-molded at 180°C and 400 Kg/cm² for 10 minutes. Afterwards the molded product was withdrawn from the mold, and was after-cured in an oven at 230°C for 8 hours to obtain a molded product for friction material.

### Application Control Runs 1 and 2

The procedure of Application Example 1 were repeated except that Dust C1 (Control Run 1) and Dust C2 (Control Run 2) were used instead of Dust 1 to obtain molded products for friction material.

### Application Control Runs 3 - 5

The procedure of each of Application Examples 1 - 3 was repeated except that cashew dust was used instead of each of Dusts 1 - 3 to obtain molded products for friction material.

Acetone-soluble matter and heating weight loss temperature of each of dusts obtained in Examples 1 - 5, Control Runs 1 - 2 and cashew dust were measured. The results are shown in Tables 1 and 2.

### Measuring Conditions:

Dried powder (about 10 g) was extracted with acetone. The dried powder was weighed before and after the extraction.

**Table 1**

| Acetone-soluble matter | | | | | | |
|---|---|---|---|---|---|---|
| | Ex.1 | Ex.2 | Ex.3 | Ex.4 | Ex.5 | cashew dust |
| acetone extraction ratio (%) | 0.2 | 0.6 | 0.1 | 0.1 | 0.1 | 7.5 |

**Table 2**

| Weight loss temperature on heating | | | | | | | | |
|---|---|---|---|---|---|---|---|---|
| | Ex.1 | Ex.2 | Ex.3 | Ex.4 | Ex.5 | Cont. Run 1 | Cont. Run 2 | cashew dust |
| 10% weight loss | 370 | 365 | 410 | 382 | 381 | 342 | 315 | 290 |
| 50% weight loss | 510 | 495 | 533 | 573 | 570 | 499 | 454 | 405 |
| 90% weight loss | 685 | 670 | 690 | 743 | 748 | 620 | 535 | 590 |
| Measuring Conditions : room temperature to 800°C | | | | | | | | |
| Rate of temperature increase : 10 °C/min. | | | | | | | | |
| Sample amount : about 15 mg | | | | | | | | |

The friction coefficient of each of the molded products obtained in Application Examples 1 - 5 and Application Control Runs 1 - 5 was measured. The results are shown in Table 3.

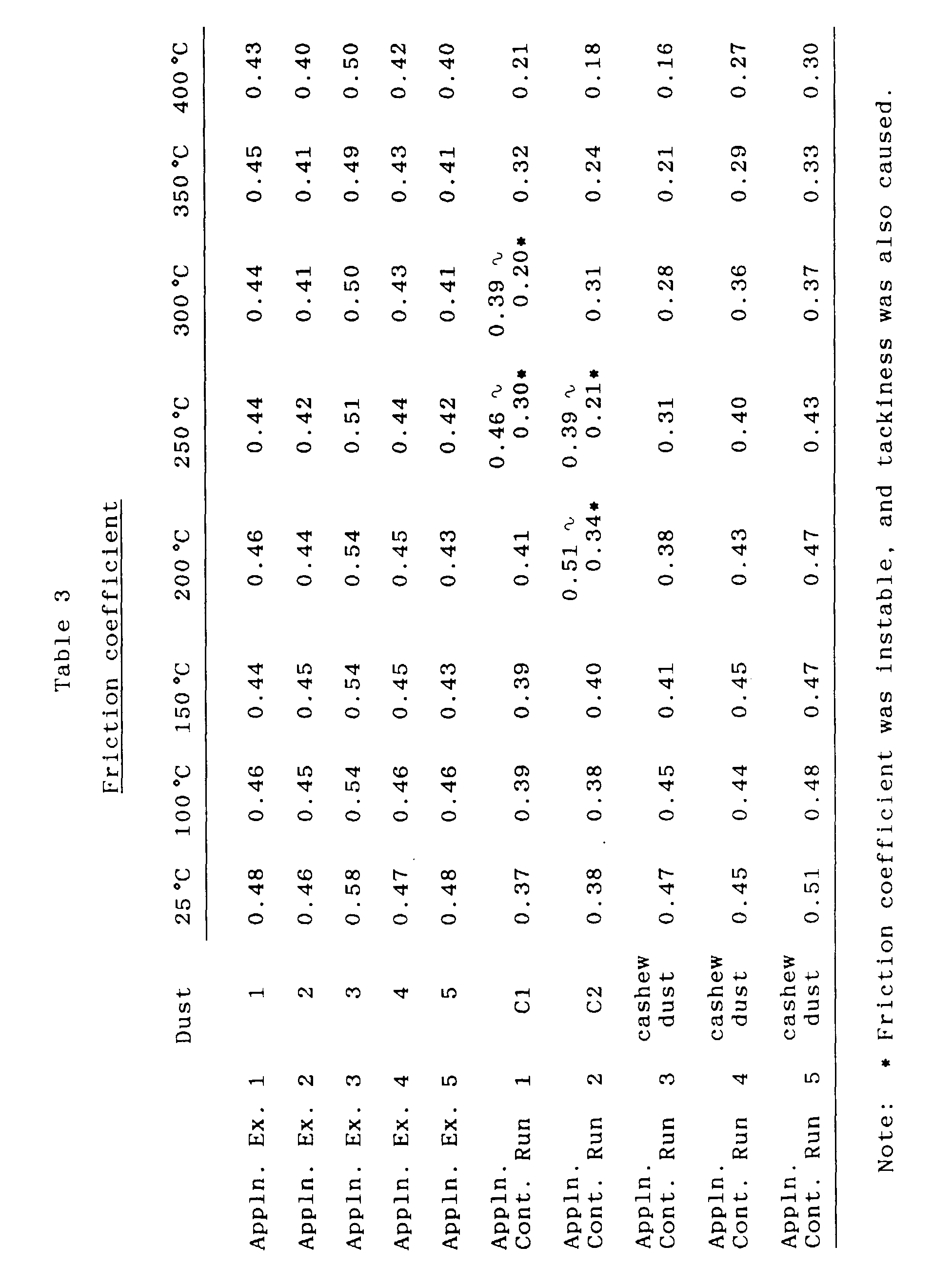

It is clear from Table 3 that the friction materials obtained by using the dusts of the present invention exhibit a friction coefficient equivalent to the friction material obtained by using the cashew dust in the range of room temperature to 150°C, and the friction coefficient of the friction material obtained by using the dust of the present invention at 400°C is approximately equivalent to that at 150°C. On the other hand, the friction coefficient of the friction material obtained by using cashew dust is reduced from 250 - 300°C.

When conventional epoxy resin was used instead of the aromatic hydrocarbon resin-modified novolak epoxy resin of the present invention (Application Control Runs 1 and 2), the friction coefficient of the resulting friction material obtained by using the conventional epoxy resin is low, in the range of room temperature to 150°C, and the friction coefficient in the range of 200 - 300°C becomes unstable, and tackiness is caused. The friction coefficients of the friction materials of Application Control Runs 1 and 2 are reduced to a considerable extent; in the temperature range of more than 200 - 300°C for liquefication of the friction materials.

It is apparent from Tables 2 and 3 that the friction material obtained by using the dust of the present invention exhibit sufficiently high friction coefficient in the range of about 450 - 500°C.

### Effectiveness of the Present Invention

As is apparent from the above description, the friction material obtained by using the thermal resistance resin dust of the present invention has a high friction coefficient in the range of room temperature to 400 - 500°C, and the present invention is significant from an industrial view point.

## Claims

1. A thermal resistance resin dust for friction material obtained by a process which comprises
a step of preparing a composition comprising
(I) an aromatic hydrocarbon-formaldehyde resin-modified novolak type epoxy resin and
(II) a cyanate ester resin composition comprising (a) polyfunctional cyanate esters, prepolymers of said cyanate ester, or prepolymers of said cyanate ester and an amine; or (a) in combination with (6) a monofunctional or polyfunctional maleimide, a prepolymer of said maleimide or a prepolymer of said maleimide and an amine, the amount of Component (II) being used in an amount of less than 50% by weight on the basis of combined weight of Components (I) and (II),
a step of curing the composition at a final curing temperature of not less than 200°C and
a step of grinding the cured product.

2. The resin dust of Claim 1 wherein said aromatic hydrocarbon-formaldehyde resin-modified novolak type epoxy resin (I) is obtained by reacting an aromatic hydrocarbon-formaldehyde resin, a phenol and a formaldehyde to form an aromatic hydrocarbon-formaldehyde resin-modified novolak, followed by reacting the OH group of the resulting novolak with epichlorohydrin to epoxidize the novolak.

3. The resin dust of Claim 2 wherein said aromatic hydrocarbon-formaldehyde resin has a number average molecular weight of 350 - 1000, an oxygen content of 5 - 20% and a melting point of 40 - 120°C.

4. The resin dust of Claim 2 or Claim 3 wherein said aromatic hydrocarbon-formaldehyde resin is at least one selected from mesitylene-formaldehyde resin, xylene-formaldehyde resin, toluene-formaldehyde resin, benzene-formaldehyde resin and naphthalene-formaldehyde resin.

5. The resin dust of Claim 2, Claim 3 or Claim 4 wherein said aromatic hydrocarbon-formaldehyde resin-modified novolak is prepared by using an aromatic hydrocarbon-formaldehyde resin/phenol having a ratio by weight of 100:100 to 100:200.

6. The resin dust of any one of claims 1 to 5 wherein the amount of said cyanate ester composition (II) employed is in the range of 10-40% by weight of the total weight of Component (I) and Component (II).

7. A thermal resistance resin dust as claimed in any one of claims 1 to wherein said composition further includes (III) an inorganic filler with cleavage property, said Component (III) being used in an amount of 5-60 parts by weight per 100 parts by weight of the combined amount of Components (I) and (II).

8. The resin dust of Claim 7 wherein the amount of said inorganic filler (III) with cleavage property employed is in the range of 8-40 parts by weight per 100 parts by weight of the combined amount of (I) and (II).

9. The resin dust of claim 7 or claim 8 wherein said inorganic filler (III) is selected from mica and hexagonal boron nitride.

10. The resin dust of claim 7, claim 8 or claim 9 wherein said inorganic filler (III) is mixed with Component (II) and the mixture then combined with Component (I).

11. The resin dust of Claim 8 wherein said aromatic hydrocarbon-formaldehyde resin-modified novolak is prepared by using an aromatic hydrocarbon-formaldehyde resin/phenol having a ratio by weight of 100:100 to 100:200.

12. The resin dust of Claim 7 wherein the amount of said cyanate ester resin compound employed is in the range of 10 - 40% by weight.

13. The resin dust of Claim 7 wherein the amount of said inorganic filler (III) with cleavage property employed is in the range of 8 - 40 parts by weight per 100 parts by weight of the combined amount of (I) and (II).

14. The resin dust of Claim 7 wherein said inorganic filler (III) is selected from mica or hexagonal boron nitride.

15. The resin dust of Claim 7 wherein said inorganic filler (III) is used as a mixture of said inorganic filler (III) and Component (II).

## Patentansprüche

1. Wärmebeständiger Harzstaub für einen Reibungswerkstoff, erhalten durch
Zubereiten einer Zusammensetzung aus
(I) einem aromatischer Kohlenwasserstoff-Formaldehydharz-modifizierten Epoxyharz vom Novolaktyp und
(II) einer Cyanatesterharzmasse, umfassend (a) polyfunktionelle Cyanatester, Präpolymere des Cyanatesters oder Präpolymere des Cyanatesters mit einem Amin, oder (a) in Kombination mit (b) einem monofunktionellen oder polyfunktionellen Maleimid, einem Präpolymer des Maleimids oder einem Präpolymer des Maleimids mit einem Amin, wobei die Menge an der Komponente (II) unter 50 Gew.-% des Gesamtgewichts der Komponenten (I) und (II) liegt,
Aushärten der Zusammensetzung bei einer Endhärtungstemperatur von nicht weniger als 200°C und
Vermahlen des gehärteten Produkts.

2. Harzstaub nach Anspruch 1, wobei das aromatischer Kohlenwasserstoff-Formaldehydharz-modifizierte Epoxyharz vom Novolaktyp (I) durch Umsetzen eines aromatischer Kohlenwasserstoff-Formaldehydharzes mit einem Phenol und einem Formaldehyd zur Bildung eines aromatischer Kohlenwasserstoff-Formaldehydharz-modifizierten Novolaks und anschließendes Umsetzen der OH-Gruppe des erhaltenen Novolaks mit Epichlorhydrin zur Epoxidierung des Novolaks hergestellt ist.

3. Harzstaub nach Anspruch 2, wobei das aromatischer Kohlenwasserstoff-Formaldehydharz ein anzahlgemitteltes Molekulargewicht von 350-1000, einen Sauerstoffgehalt von 5-20% und einen Schmelzpunkt von 40-120°C aufweist.

4. Harzstaub nach Anspruch 2 oder 3, wobei das aromatischer Kohlenwasserstoff-Formaldehydharz aus mindestens einem Harz, ausgewählt aus Mesitylen-Formaldehyd-, Xylol-Formaldehyd-, Toluol-Formaldehyd-, Benzol-Formaldehyd- und Naphthalin-Formaldehydharzen, besteht.

5. Harzstaub nach Anspruch 2, 3 oder 4, wobei der aromatischer Kohlenwasserstoff-Formaldehydharz-modifizierte Novolak unter Einhalten eines Gewichtsverhältnisses aromatischer Kohlenwasserstoff-Formaldehydharz/Phenol von 100/100 bis 100/200 hergestellt ist.

6. Harzstaub nach einem der Ansprüche 1 bis 5, wobei die Menge an der verwendeten Cyanatestermasse (II) im Bereich von 10-40 Gew.-% des Gesamtgewichts der Komponenten (I) und (II) liegt.

7. Wärmebeständiger Harzstaub nach einem der Ansprüche 1 bis 5, wobei die Zusammensetzung zusätzlich (III) einen anorganischen Füllstoff mit Spaltungseigenschaften in einer Menge von 5-60 Gew.-Teilen pro 100 Gew.-Teile der Gesamtmenge an Komponenten (I) und (II) enthält.

8. Harzstaub nach Anspruch 7, wobei die Menge an dem verwendeten anorganischen Füllstoff mit Spaltungseigenschaften (III) im Bereich von 8-40 Gew.-Teilen pro 100 Gew.-Teile der Gesamtmenge an (I) und (II) liegt.

9. Harzstaub nach Anspruch 7 oder 8, wobei der anorganische Füllstoff (III) aus Glimmer und hexagonalem Bornitrid ausgewählt ist.

10. Harzstaub nach Anspruch 7, 8 oder 9, wobei der anorganische Füllstoff (III) mit der Komponente (II) gemischt und die Mischung dann mit der Komponente (I) vereinigt wurde.

11. Harzstaub nach Anspruch 8, wobei der aromatischer Kohlenwasserstoff-Formaldehydharz-modifizierte Novolak unter Einhaltung eines Gewichtsverhältnisses aromatischer Kohlenwasserstoff-Formaldehydharz/Phenol von 100/100 bis 100/200 hergestellt ist.

12. Harzstaub nach Anspruch 7, wobei die Menge an der verwendeten Cyanatesterharzverbindung im Bereich von 10-40 Gew.-% liegt.

13. Harzstaub nach Anspruch 7, wobei die Menge an dem verwendeten anorganischen Füllstoff mit Spaltungseigenschaften (III) im Bereich von 8-40 Gew.-Teilen pro 100 Gew.-Teile der gesamten Menge an (I) und (II) liegt.

14. Harzstaub nach Anspruch 7, wobei der anorganische Füllstoff (III) aus Glimmer oder hexagonalem Bornitrid ausgewählt ist.

15. Harzstaub nach Anspruch 7, wobei der anorganische Füllstoff (III) als Gemisch aus dem anorganischen Füllstoff (III) und der Komponente (II) eingesetzt wurde.

## Revendications

1. Poussière de résine à résistance thermique pour un matériau de friction obtenue par un procédé qui comprend :
une étape de préparation d'une composition comprenant
(I) une résine époxy du type novolaque modifiée par une résine d'hydrocarbure aromatique-formaldéhyde et
(II) une composition de résine d'ester de cyanate comprenant (a) des esters de cyanate polyfonctionnels, des prépolymères dudit ester de cyanate ou des prépolymères dudit ester de cyanate et d'une amine; ou (a) en combinaison avec (b) un maléimide monofonctionnel ou polyfonctionnel, un prépolymère dudit maléimide ou un prépolymère dudit maléimide et d'une amine, la quantité du Composant (II) étant utilisée en une quantité de moins de 50% en poids sur la base du poids combiné des Composants (I) et (II),
une étape de durcissement de la composition à une température finale de durcissement de pas moins de 200°C et
une étape de broyage du produit durci.

2. Poussière de résine de la revendication 1 où ladite résine époxy du type novolaque modifiée par une résine d'hydrocarbure-formaldéhyde est obtenue par réaction d'une résine d'hydrocarbure aromatique-formaldéhyde, d'un phénol et d'un formaldéhyde pour former une novolaque modifiée par une résine d'hydrocarbure aromatique-formaldéhyde avec ensuite réaction du groupe OH de la novolaque résultante avec de l'épichlorohydrine pour époxyder la novolaque.

3. Poussière de résine de la revendication 2 où ladite résine d'hydrocarbure aromatique-formaldéhyde a un poids moléculaire moyen en nombre de 350-1000, une teneur en oxygène de 5-20% et un point de fusion de 40-120°C.

4. Poussière de résine de la revendication 2 ou de la revendication 3 où ladite résine d'hydrocarbure aromatique-formaldéhyde est au moins sélectionnée parmi une résine de mésitylène-formaldéhyde, une résine de xylène-formaldéhyde, une résine de toluène-formaldéhyde, une résine de benzène-formaldéhyde et une résine de naphtalène-formaldéhyde.

5. Poussière de résine de la revendication 2, de la revendication 3 ou de la revendication 4 où ladite novolaque modifiée par une résine d'hydrocarbure-aromatique-formaldéhyde est préparée en utilisant une résine d'hydrocarbure aromatique-formaldéhyde/phénol ayant un rapport en poids de 100:100 à 100:200.

6. Poussière de résine selon l'une quelconque des revendications 1 à 5 où la quantité de ladite composition d'ester de cyanate (II) employée est de l'ordre de 10-40% en poids du poids total du Composant (I) et du Composant (II).

7. Poussière de résine à résistance thermique selon l'une quelconque des revendications 1 à 5 où ladite composition contient de plus (III) une charge inorganique avec propriété de scission, ledit Composant (III) étant utilisé en une quantité de 5-60 parties en poids pour 100 parties en poids de la quantité combinée des Composants (I) et (II).

8. Poussière de résine de la revendication 7 où la quantité de ladite charge inorganique (III) avec propriété de scission employée est de l'ordre de 8-40 parties en poids pour 100 parties en poids de la quantité combinée de (I) et (II).

9. Poussière de résine de la revendication 7 ou de la revendication 8 où ladite charge inorganique (III) est sélectionnée parmi le mica et le nitrure de bore hexagonal.

10. Poussière de résine de la revendication 7, de la revendication 8 ou de la revendication 9 où ladite charge inorganique (III) est mélangée au Composant (II) et le mélange est alors combiné au Composant (I).

11. Poussière de résine de la revendication 8 où ladite novolaque modifiée par une résine d'hydrocarbure aromatique-formaldéhyde est préparée en utilisant une résine d'hydrocarbure aromatique-formaldéhyde/phénol ayant un rapport en poids de 100:100 à 100:200.

12. Poussière de résine de la revendication 7 où la quantité dudit composé de résine d'ester de cyanate employé est de l'ordre de 10-40% en poids.

13. Poussière de résine de la revendication 7 où la quantité de ladite charge inorganique (II) avec une propriété de scission employée est de l'ordre de 8-40 parties en poids pour 100 parties en poids de la quantité combinée de (I) et (II).

14. Poussière de résine de la revendication 7 où ladite charge inorganique (III) est sélectionnée parmi le mica ou le nitrure de bore hexagonal.

15. Poussière de résine de la revendication 7 où ladite charge inorganique (III) est utilisée comme mélange de ladite charge inorganique (III) et du Composant (II).
